# FASCICULE DE BREVET EUROPEEN

(11) **EP 1 672 388 B1**
(45) Date de publication et mention de la délivrance du brevet: **28.09.2011**
(21) Numéro de dépôt: 05112346.1
(22) Date de dépôt: 16.12.2005
(51) Int. Cl.: G01S 13/75

(54) **Transpondeur électromagnétique dépourvu d'alimentation autonome**
Elektromagnetischer Transponder ohne eigenständige Energieversorgung
Electromagnetic transponder without autonomous energy supply

(30) Priorité: 20.12.2004 FR 0453066
(43) Date de publication de la demande: 21.06.2006
(73) Titulaire: STMICROELECTRONICS S.A., 92120 Montrouge (FR)
(72) Inventeur: Conraux, Jérôme, 13530 Trets (FR)
(74) Mandataire: de Beaumont, Michel

(56) Documents cités:
- EP-A- 1 152 257
- FR-A- 2 776 865
- FR-A- 2 792 136
- US-A- 6 134 130

## Description

### Domaine de l'invention

La présente invention concerne de façon générale les transpondeurs électromagnétiques et, plus particulièrement, un transpondeur électromagnétique dépourvu d'alimentation autonome.

Un exemple d'application de la présente invention concerne les cartes à puce ou étiquettes électroniques communiquant sans contact avec un terminal et extrayant l'énergie nécessaire à l'alimentation des circuits qu'elles comportent du champ électromagnétique haute fréquence rayonné par le terminal. La présente invention s'applique notamment à des étiquettes électroniques ou cartes à puce dans des applications de type passeport électronique.

### Exposé de l'art antérieur

Les systèmes pour transpondeurs électromagnétiques sont basés sur la coopération entre un circuit oscillant côté terminal de lecture-écriture et un circuit résonant côté transpondeur électromagnétique (généralement, un élément portable), pour échanger des informations en utilisant un champ haute fréquence rayonné par le circuit oscillant du terminal. Dans les transpondeurs auxquels s'applique la présente invention, la porteuse haute fréquence sert également de porteuse de télé-alimentation fournissant l'énergie d'alimentation du transpondeur.

Un exemple d'application de l'invention concerne les systèmes à transpondeurs basés sur des normes ISO 14443 et 15693 selon lesquelles la porteuse de télé-alimentation rayonnée par le terminal est de 13,56 MHz, tandis qu'une sous-porteuse de rétromodulation peut être utilisée par les transpondeurs pour émettre des informations vers le terminal avec une fréquence de 847,5 kHz. Dans le sens terminal vers transpondeur, la porteuse est modulée en amplitude avec un taux de modulation généralement de l'ordre de 10 %. Le taux de modulation se définit comme étant la différence d'amplitudes entre la transmission d'un état 1 et la transmission d'un état 0, divisée par la somme de ces amplitudes. En fait, les normes fixent une plage de taux de modulation acceptables que les transpondeurs sont censés être capables d'interpréter et que les terminaux sont censés respecter. Cette plage est, dans le cas des normes mentionnées ci-dessus, comprise entre 8 et 14 %.

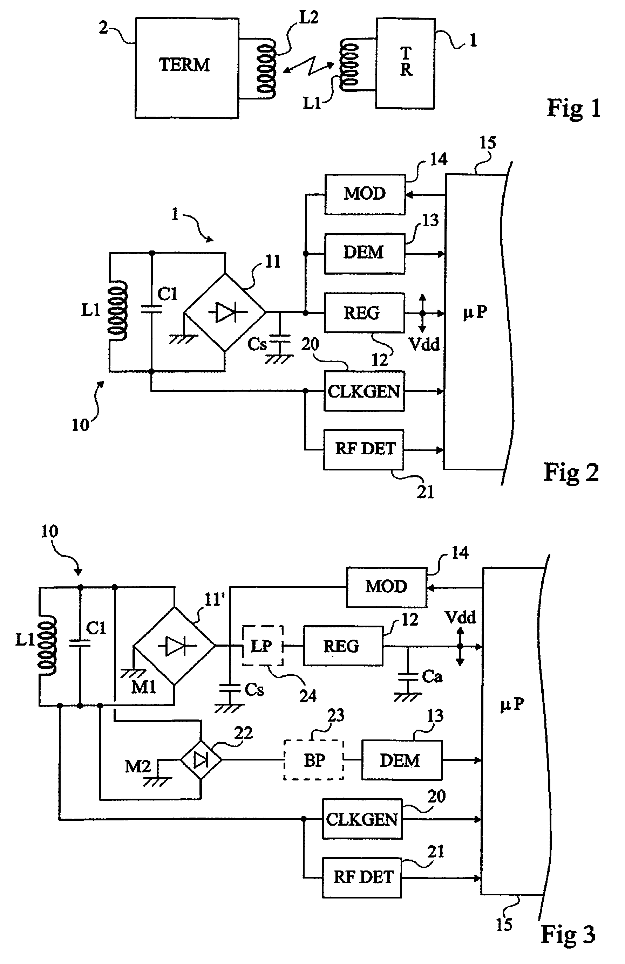

La figure 1 représente, de façon très schématique et sous forme de blocs, un exemple de système à transpondeurs électromagnétiques auquel s'applique la présente invention. Un transpondeur 1 (TR) est destiné à être placé dans le champ électromagnétique d'un terminal 2 (TERM) dont un élément inductif L2 d'un circuit oscillant émet un rayonnement haute fréquence que capte une antenne L1 du transpondeur 1.

La figure 2 représente, de façon très schématique et sous forme de blocs, un exemple d'architecture classique d'un transpondeur électromagnétique 1. Le transpondeur comporte un circuit oscillant 10, constitué d'un élément inductif L1 formant antenne, en parallèle avec un condensateur C1 aux bornes d'entrée alternative d'un pont de redressement 11. Les bornes de sortie redressée du pont 11 sont reliées par un condensateur de stockage Cs. Le signal capté lorsque le transpondeur 1 est dans le champ d'un terminal est utilisé en amont et en aval du pont redresseur 11.

En aval, la tension redressée récupérée en sortie du pont 11 sert notamment à un régulateur 12 (REG) pour extraire une tension d'alimentation continue Vdd des circuits du transpondeur. La sortie du pont 11 est également reliée en entrée d'un circuit 13 (DEM) de démodulation des données reçues, généralement un démodulateur d'amplitude. Enfin, un modulateur 14 (MOD) des informations à transmettre en direction du terminal par rétromodulation relie un microprocesseur 15 (µP) ou tout autre circuit de commande et d'interprétation numérique des transmissions, à un étage de rétromodulation connecté en sortie du pont 11. Pour simplifier, l'étage de rétromodulation a été supposé intégré au bloc 14.

En amont du pont de redressement 11, le signal haute fréquence est prélevé à destination, notamment, d'un circuit 20 (CLK GEN) de génération d'une horloge à partir de la porteuse haute fréquence et d'un circuit 21 (RF DET) de détection de la présence d'une excitation radiofréquence aux bornes du circuit résonant 10.

Un inconvénient des transpondeurs classiques est que la tension d'alimentation Vdd fournie par le régulateur 12 est bruitée par les commutations opérées en aval (notamment par le microprocesseur). Ce bruit se trouve répercuté à l'entrée du régulateur 12 sur le signal redressé du pont 11, ce qui dégrade le rapport signal/bruit du système et rend donc l'extraction des données par le démodulateur 13 plus difficile.

Ce problème est d'autant plus présent que le taux de modulation est faible. Or, un faible taux de modulation (typiquement, moins de 20%) est par ailleurs requis pour fournir une énergie suffisante de téléalimentation. En effet, une transmission en modulation d'amplitude en tout ou rien diviserait environ par deux la capacité de téléalimentation.

Le document FR-A-2776865 décrit un dispositif de télétransmission par couplage inductif du type mentionné dans le préambule de la revendication 1.

Le document EP-A-1282071 décrit une carte à circuit intégré dans laquelle deux diodes additionnelles branchées sur un pont de redressement sont reliées à un démodulateur.

### Résumé de l'invention

La présente invention vise à pallier tout ou partie des inconvénients des transpondeurs électromagnétiques connus, en particulier des transpondeurs destinés à recevoir des données modulées en amplitude avec un taux de modulation inférieur à l'unité.

L'invention vise notamment à améliorer le rapport signal/bruit en entrée d'un démodulateur d'amplitude d'un transpondeur électromagnétique.

L'invention vise également à proposer une solution qui ne nécessite aucune modification du terminal du système à transpondeur électromagnétique.

Pour atteindre tout ou partie de ces objets ainsi que d'autres, la présente invention prévoit un transpondeur électromagnétique comportant :
un circuit oscillant ;
un premier pont de redressement dont les bornes d'entrée alternative sont connectées aux bornes du circuit oscillant et dont les bornes de sortie redressée sont reliées au moins à un régulateur de tension chargé de fournir une tension d'alimentation ; et
un deuxième pont de redressement, de dimension inférieure à celle du premier pont, dont les deux bornes d'entrée alternative sont connectées aux bornes du circuit oscillant et dont au moins une borne de sortie est reliée à un démodulateur de données captées par le circuit oscillant.

Selon un mode de réalisation de la présente invention, les rapports des surfaces des premier et deuxième ponts de redressement sur la surface totale occupée par les ponts réalisés sous forme intégrée sont compris entre 80-20 et 98-2, de préférence entre 93-7 et 97-3.

Selon un mode de réalisation de la présente invention, un filtre passe-bande est intercalé entre le deuxième pont de redressement et le démodulateur.

Selon un mode de réalisation de la présente invention, un filtre passe-bas est intercalé entre le premier pont de redressement et le régulateur de tension.

Selon un mode de réalisation de la présente invention, des bornes de référence des sorties redressées des ponts sont isolées l'une de l'autre ou reliées par un élément résistif.

### Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 qui a été décrite précédemment représente, de façon très schématique et sous forme de blocs, un exemple de système à transpondeurs électromagnétiques du type auquel s'applique la présente invention ;
la figure 2 qui a été décrite précédemment représente, de façon très schématique et sous forme de blocs, un exemple d'architecture classique d'un transpondeur électromagnétique ; et
la figure 3 représente, de façon très schématique et sous forme de blocs, un mode de réalisation d'un transpondeur électromagnétique selon la présente invention.

De mêmes éléments ont été désignés par de mêmes références aux différentes figures. Par souci de clarté, seuls les éléments nécessaires à la compréhension de l'invention ont été représentés et seront décrits par la suite. En particulier, les constitutions respectives des différents éléments du transpondeur n'ont été détaillées que lorsqu'elles ne reprennent pas des structures classiques. De plus, les structures des circuits numériques (microprocesseurs ou circuits en logique câblée) d'interprétation des données transmises n'ont pas été détaillées, l'invention étant compatible avec les circuits classiques.

### Description détaillée

La figure 3 représente, de façon très schématique et sous forme de blocs, un mode de réalisation d'un transpondeur électromagnétique selon la présente invention.

Comme précédemment, le transpondeur comporte un circuit oscillant 10 constitué d'une inductance L1 formant antenne en parallèle avec un condensateur C1 pour capter le champ électromagnétique d'un terminal de lecture-écriture. Toujours comme précédemment, le transpondeur comporte une unité numérique 15 (par exemple, un microprocesseur µP) de commande et d'interprétation des transmissions ainsi que, connectés directement au circuit oscillant, un circuit 20 (CLK GEN) de génération d'horloge et un circuit 21 (RF DET) de détection d'excitation radiofréquence dont les sorties respectives sont envoyées sur le microprocesseur 15.

Une caractéristique de la présente invention est de prévoir deux ponts de redressement 11' et 22 dont les entrées alternatives respectives sont reliées aux bornes du circuit oscillant 10. Le pont 11' est de capacité plus importante que le pont 22. Les dimensions respectives des ponts 11' et 22 sont fonction des besoins en courant des circuits avals qui y sont connectés.

Le pont 22 de taille réduite est destiné uniquement à un démodulateur 13 (DEM) de constitution en elle-même classique, qui est relié à la sortie redressée du pont 22 et qui fournit les données démodulées au microprocesseur 15.

Le pont 11' est au moins destiné à fournir l'énergie nécessaire à un régulateur 12 (REG) en lui-même classique pour qu'il produise la tension Vdd d'alimentation des circuits du transpondeur. Comme précédemment, un condensateur Cs relie les sorties redressées du pont 11' et la tension Vdd est fournie aux bornes d'un condensateur Ca en sortie du régulateur 12.

Le fait de dédier un pont de redressement 22 au démodulateur 13 permet d'isoler le signal à démoduler des bruits de commutation en aval du pont 11'. En effet, ces bruits ne passent pas dans les éléments de redressement en inverse et ne se retrouvent donc pas côté circuit oscillant 10. Le rapport signal/bruit en entrée du démodulateur 13 est ainsi amélioré.

La présente invention tire profit du fait que les besoins en courant du démodulateur d'amplitude sont très faibles devant les besoins en courant du transpondeur. Typiquement, le démodulateur (qui interprète un signal de tension) a besoin de quelques dizaines de microampères, alors que l'alimentation du transpondeur requiert jusqu'à 100 milliampères, voire plus. Les besoins sont donc dans un rapport de 1 à 1000, voire de 1 à 10000. Les rapports des surfaces des ponts 11' et 22 sur la surface totale occupée par les ponts réalisés sous forme intégrée sont compris entre 80-20 et 98-2. De préférence, le pont 22 représente entre 3 et 7% de la surface totale occupée par les ponts (rapports compris entre 97-3 et 93-7).

En fonction du type de technologie utilisé pour intégrer le circuit (notamment le recours ou non à des caissons séparés), les bornes de référence M1 et M2 des ponts 11' et 22 pourront être isolées l'une de l'autre ou être reliées par une résistance, de façon à éviter les remontées de bruits de commutation par la masse.

Le fait que les circuits 20 et 21 soient directement connectés au circuit oscillant 10 n'est pas gênant. En effet, les bruits de commutation sont renvoyés par les tensions d'alimentation et, comme ces circuits sont alimentés par la tension Vdd, les bruits remontent sur le régulateur 12, puis sont bloqués par le pont 11'.

Un modulateur 14 (MOD) de constitution classique effectuant la rétromodulation des données à transmettre vers le transpondeur est relié sur le pont 11' plutôt que sur le pont 22, de façon, là encore, à ne pas polluer le démodulateur.

Selon une variante illustrée en pointillés, un filtre passe-bande 23 (BP) est intercalé entre la sortie du pont 22 et l'entrée du démodulateur 13, de façon à ne laisser passer que la bande de fréquences du signal de données attendues par le démodulateur.

Selon une autre variante illustrée en pointillés, un filtre passe-bas 24 (LP) est intercalé en amont du régulateur de tension 12, de façon à filtrer le bruit haute fréquence généré par le circuit sur la tension d'alimentation.

Bien entendu, la présente invention est susceptible de diverses variantes et modifications qui apparaîtront à l'homme de l'art. En particulier, la réalisation pratique de l'invention à partir des indications fonctionnelles données ci-dessus est à la portée de l'homme du métier. De plus, d'autres circuits pourront être reliés en aval du pont 11' selon les applications, pourvu que le pont 22 soit dédié au démodulateur 13 et que l'alimentation des éventuels circuits reliés en amont des ponts 11' et 22 proviennent du pont 11'.

## Revendications

1. Transpondeur électromagnétique comportant :
un circuit oscillant (10);
un premier pont de redressement (11') dont les bornes d'entrée alternative sont connectées aux bornes du circuit oscillant et dont les bornes de sortie redressée sont reliées au moins à un régulateur de tension (12) chargé de fournir une tension d'alimentation (Vdd),
**caractérisé en ce qu'**il comporte un deuxième pont de redressement (22), de dimension inférieure à celle du premier pont, dont les deux bornes d'entrée alternative sont connectées aux bornes du circuit oscillant et dont au moins une borne de sortie est reliée à un démodulateur (13) de données captées par le circuit oscillant.

2. Transpondeur selon la revendication 1, dans lequel les rapports des surfaces des premier et deuxième ponts de redressement sur la surface totale occupée par les ponts réalisés sous forme intégrée sont compris entre 80-20 et 98-2, de préférence entre 93-7 et 97-3.

3. Transpondeur selon la revendication 1, dans lequel un filtre passe-bande (23) est intercalé entre le deuxième pont de redressement (22) et le démodulateur (13).

4. Transpondeur selon la revendication 1, dans lequel un filtre passe-bas (24) est intercalé entre le premier pont de redressement (11) et le régulateur de tension (12).

5. Transpondeur selon la revendication 1, dans lequel des bornes (M1, M2) de référence des sorties redressées des ponts (11', 22) sont isolées l'une de l'autre ou reliées par un élément résistif.

## Claims

1. An electromagnetic transponder comprising:
an oscillating circuit (10);
a first rectifying bridge (11') having its A.C. input terminals connected across the oscillating circuit and having its rectified output terminals connected at least to a voltage regulator (12) in charge of providing a supply voltage (Vdd),
**characterized in that** it comprises a second rectifying bridge (22), of dimension smaller than that of the first bridge, having its two A.C. input terminals connected across the oscillating circuit and having at least one output terminal connected to a demodulator (13) of data sensed by the oscillating circuit.

2. The transponder of claim 1, wherein the surface area ratios of the first and second rectifying bridges to the total surface area taken up by the bridges formed in integrated form range between 80-20 and 98-2, preferably between 93-7 and 97-3.

3. The transponder of claim 1, wherein a bandpass filter (23) is interposed between the second rectifying bridge (22) and the demodulator (13).

4. The transponder of claim 1, wherein a low-pass filter (24) is interposed between the first rectifying bridge (11) and the voltage regulator (12).

5. The transponder of claim 1, wherein reference terminals (M1, M2) of the rectified outputs of the bridges (11', 22) are isolated from each other or connected by a resistive element.

## Patentansprüche

1. Ein elektromagnetischer Transponder der folgendes aufweist:
eine Oszillatorsschaltung (10);
eine erste Gleichrichterbrücke (11') deren Wechselstromeingangsanschlüsse mit den Anschlüssen der Oszillatorschaltung verbunden sind und die mit ihrem Gleichrichtungsausgangsanschlüssen mit mindestens einem Spannungsregler (12) verbunden ist, der eine Versorgungsspannung (Vdd) liefert, **dadurch gekennzeichnet, dass** folgendes vorgesehen ist:
eine zweite Gleichrichterbrücke (22) mit einer Dimension kleiner als die erste Brücke und die mit ihren zwei Wechselstromeingangsanschlüssen mit der Oszillatorsschaltung verbunden ist und die mit mindestens einem Ausgangsanschluss mit einem Demodulator (13) verbunden ist, von durch die Oszillatorschaltung abgefühlten Daten.

2. Der Transponder nach Anspruch 1, wobei die Oberflächenverhältnisse der ersten und zweiten Gleichrichterbrücken zur Gesamtoberfläche, eingenommen durch die Brücken gebildet in einer integrierten Form zwischen 80-20 und 98-2 vorzugsweise zwischen 93-7 und 97-3 liegen.

3. Der Transponder nach Anspruch 1, wobei ein Bandpassfilter (23) zwischen der zweiten Gleichrichterbrücke (22) und dem Demodulator (13) vorgesehen ist.

4. Transponder nach Anspruch 1, wobei ein Tiefpassfilter (24) zwischen der ersten Gleichrichterbrücke (11') und dem Spannungsregler (12) eingefügt ist.

5. Transponder nach Anspruch 1, wobei Referenz- oder Bezugsanschlüsse (M1, M2) der gleichgerichteten Ausgänge der Brücken (11', 22) voneinander isoliert oder getrennt sind oder aber durch ein Widerstandselement verbunden sind.
